# EUROPEAN PATENT SPECIFICATION

(11) **EP 3 478 026 B1**
(45) Date of publication and mention of the grant of the patent: **30.06.2021**
(21) Application number: 17198393.5
(22) Date of filing: 25.10.2017
(51) Int. Cl.: H05B 6/06

(54) **INDUCTION HOB COMPRISING AN ELECTROMAGNETIC INTERFERENCE FILTER**
INDUKTIONSKOCHFELD MIT EINEM ELEKTROMAGNETISCHEN STÖRFILTER
TABLE DE CUISSON PAR INDUCTION COMPRENANT UN FILTRE D'INTERFÉRENCE ÉLECTROMAGNÉTIQUE

(43) Date of publication of application: 01.05.2019
(73) Proprietor: ELECTROLUX APPLIANCES AKTIEBOLAG, 105 45 Stockholm (SE)
(72) Inventor: URGESE, Emanuel, 47100 Forli (IT); MILANESI, Filippo, 47122 Forli (IT); ZANGOLI, Massimo, 47122 Forli (IT); JEANNETEAU, Laurent, 47122 Forli (IT); SANTILANO, Simone, 47100 Forli (IT); VIROLI, Alex, 47122 Forli (IT)
(74) Representative: Electrolux Group Patents

(56) References cited:
- EP-A1- 2 512 205
- EP-A2- 2 506 671
- CN-U- 206 313 657
- JP-A- H11 149 979
- US-A1- 2009 295 524

## Description

Generally, the present invention relates to the field of induction hobs. More specifically, the present invention relates to an induction hob comprising an electromagnetic interference filter for filtering interferences occurring in the power unit of the induction hob.

### BACKGROUND OF THE INVENTION

Induction hobs for preparing food are well known in prior art. Induction hobs typically comprise at least one heating zone which is associated with at least one induction coil. For heating a piece of cookware placed on the heating zone, the induction coil is coupled with electronic driving means, in the following referred to as power unit, for driving an AC current through the induction coil. Said power unit may include an AC power input and a power conversion entity providing high frequency electric current to the induction coil.

Disadvantageously, within said power unit high-frequency noise is generated. Said high-frequency noise has detrimental effect, for example on the AC mains voltage. Therefore, an electromagnetic interference filter is used for reducing the effect of high-frequency noise. Said electromagnetic interference filter may comprise a plurality of electrical components in order to implement common mode and differential mode filtering capabilities.

JP H11 149979 A discloses an induction hob according to the preamble of claim 1.

### SUMMARY OF THE INVENTION

It is an objective of the embodiments of the present invention to provide an induction hob including an electromagnetic interference filter with reduced filter complexity. The objective is solved by the features of the independent claims. Preferred embodiments are given in the dependent claims.

According to an aspect, the invention relates to an induction hob comprising an AC power input (i.e. mains voltage input) and a power conversion entity adapted to provide high frequency electric current to an induction coil. An electromagnetic filtering section is provided between said AC power input and said power conversion entity. Preferably, said electromagnetic filtering section comprises common mode filtering means and differential mode filtering means. Said electromagnetic filtering section may particularly comprise a closed magnetic core element around which at least two coils are provided. Said closed magnetic core element and said coils preferably provide said common mode filtering means. Said differential mode filtering means more preferably are adapted to enable a direct magnetic flux between the coil ends of each coil in order to obtain differential mode filtering effect.

Said induction hob is advantageous because said electromagnetic filtering section provides common mode and differential mode filtering capabilities in a single component. Thereby, the installation space of the filtering section and manufacturing costs can be reduced.

According to embodiments, said closed magnetic core element comprises a ring-like or polygonal shape. Said closed magnetic core element may be built by a single core element or may comprise multiple core element sections which are assembled such that a closed magnetic core element is built.

According to embodiments, said differential mode filtering means comprise a bar-shaped or plate-shaped core element arranged between said coils. Based on said bar-shaped or plate-shaped core element, a shortcut for the magnetic flux is created, said short cut being arranged between the electromagnetic coils. Said bar-shaped or plate-shaped core element adds differential mode filtering capabilities to a common mode filter formed by the closed magnetic core element and the pair of coils.

According to embodiments, an air gap is provided at one side or at each side between said bar-shaped or plate-shaped core element and said closed magnetic core element. Thereby, the filtering behaviour of the filtering section can be designed according the required needs. Specifically, the relationship between common mode and differential mode filtering capabilities can be tuned by including one or two air gaps, respectively, by selecting the width of the air gap.

According to embodiments, said closed magnetic core element comprises core projections facing each other at opposite sections of the closed magnetic core element, said core projections forming said means for closing a magnetic flux between said coils. So, in other words, said core projections partially reduce a gap between core element sections which extend between the coil ends of said two coils. Said core projections may be integrally formed at the closed magnetic core element. Preferably, a single air gap is provided in a central region between said two coils and between said core projections.

According to embodiments, the sections of the closed magnetic core element arranged between said coils comprise an E-like or essentially E-like shape. For example, the upper and lower leg of an E-shaped magnetic core element section extends into an inner portion of said coils and the central leg forms the core projection which extends into a central portion arranged between said coils.

According to embodiments, said closed magnetic core element and/or said bar-shaped or plate-shaped core element are injection moulded or powder compression moulded elements.

According to embodiments, said closed magnetic core element and/or said bar-shaped or plate-shaped core element are made of ferrite or laminated metal sheet.

According to embodiments, said coils comprise the same number of windings. Preferably, said coils comprise the same winding direction. Thereby, a symmetric filtering effect is obtained.

According to other embodiments, said coils comprise a different number of turns. Thereby, the differential filtering effect is enhanced.

According to embodiments, the permeability of said closed magnetic core element and/or said bar-shaped or plate-shaped core element is chosen in order to achieve a desired filtering effect. Thereby, desired filtering capabilities for induction hob applications can be obtained.

According to a further aspect, a method for increasing differential filtering effect in an induction hob is provided. Said induction hob comprises an AC power input and a power conversion entity adapted to provide high frequency electric current to an induction coil. Said induction hob further comprises an electromagnetic filtering section provided between said AC power input and said power conversion entity. Said electromagnetic filtering section comprises common mode filtering means and differential mode filtering means. Said electromagnetic filtering section comprises a closed magnetic core element around which at least two coils are provided. Said closed magnetic core element and said coils provide said common mode filtering. Said differential mode filtering means enable a direct magnetic flux between the coil ends of each coil in order to obtain differential mode filtering effect.

The terms "essentially", "substantially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: shows a schematic circuit diagram of a power unit of an induction hob;
- Fig. 2: shows an electromagnetic filtering section comprising common mode and differential mode filtering capabilities based on an additional core section provided between the coils;
- Fig. 3: illustrates the cancelling of magnetic flux in a choke comprising a pair of coils and a ring-shaped core element;
- Fig. 4: illustrates differential mode filtering capabilities of a choke additionally comprising a bar-shaped core element;
- Fig. 5: shows an embodiment of a choke with a bar-shaped core element which is distanced from the ring-shaped core element by means of air gaps; and
- Fig. 6: shows a further embodiment of an electromagnetic filtering section comprising core projections between the coils which are spaced by a central air gap.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

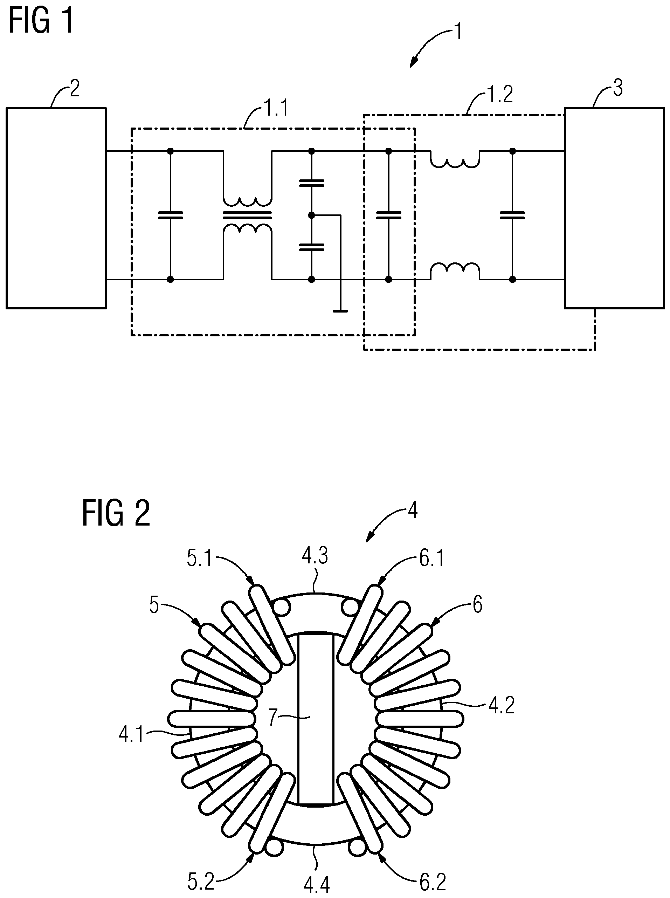

Fig. 1 illustrates a schematic equivalent circuit diagram of a power unit circuity included in an induction hob.

The circuity comprises an AC power input 2, a power conversion entity 3 and an electromagnetic filter section 1 included between said AC power input 2 and said power conversion entity 3. Said AC power input 2 provides AC mains power to the power conversion entity 3 in order to enable a provision of electric power to an induction coil coupled with the power conversion entity 3. Said power conversion entity 3 may provide electronic driving means for driving an AC current through the induction coil. For example, the power conversion entity 3 may comprise a switching section including one or more switching elements (e.g. IGBTs) and a resonant section which is put into oscillation by means of the switching section.

In order to avoid or suppress interference between the AC power input 2 and the power conversion entity 3, said electromagnetic filter section 1 provide electrical filtering capabilities. Specifically, said electromagnetic filter section 1 is adapted to suppress high frequency interferences generated in the power conversion entity 3 and having a detrimental effect on the AC power input 2.

In order to face with common mode and differential mode interferences, the electromagnetic filter section 1 comprises common mode filtering means and differential mode filtering means.

In state of the art electromagnetic filter sections included in induction hobs, the common mode and differential mode filtering means are provided by different filtering sections, namely a common mode filtering section 1.1 and a differential mode filtering section 1.2, which are highlighted in the schematic equivalent circuit of Fig. 1 by dashed frames. In addition, said common mode filtering section 1.1 and said differential mode filtering section 1.2 may comprise different electronic elements for realizing said filtering sections 1.1, 1.2.

Fig. 2 shows an embodiment of an electromagnetic filter section 1 which combines common mode and differential mode filtering capabilities in a single electronic device. The electromagnetic filter section 1 comprises a choke which includes common mode and differential mode filtering means.

More in detail, the choke comprises a closed magnetic core element 4 and a pair of coils 5, 6 arranged at said closed magnetic core element 4. More in detail, the closed magnetic core element 4 comprises a first and a second coil section 4.1, 4.2, at which said coils 5, 6 are provided. Specifically, the windings of the coil 5 are wound around said first coil section 4.1 and the windings of the coil 6 are wound around said second coil section 4.2. Said first and second coil sections 4.1, 4.2 may be arranged opposite to each other.

In addition, said closed magnetic core element 4 comprises a pair of coupling sections 4.3, 4.4, said coupling sections 4.3, 4.4 coupling the first and second coil sections 4.1, 4.2 at opposite sides. More in detail, the coupling section 4.3 may be arranged between the free ends 5.1, 6.1 of the coils 5, 6 and the coupling section 4.4 may be arranged between the free ends 5.2, 6.2 of the coils 5, 6. Thereby a closed magnetic core element 4 is provided.

Said closed magnetic core element 4 may comprise a ring-like, circular or polygonal, specifically rectangular or quadratic shape.

The closed magnetic core element 4 comprising the pair of coils 5, 6 for enabling an electrical coupling between the AC power input 2 and the power conversion entity 3 acts as a common mode filtering choke because electric noise signals flowing in the same direction cause a high impedance within the choke and are therefore suppressed.

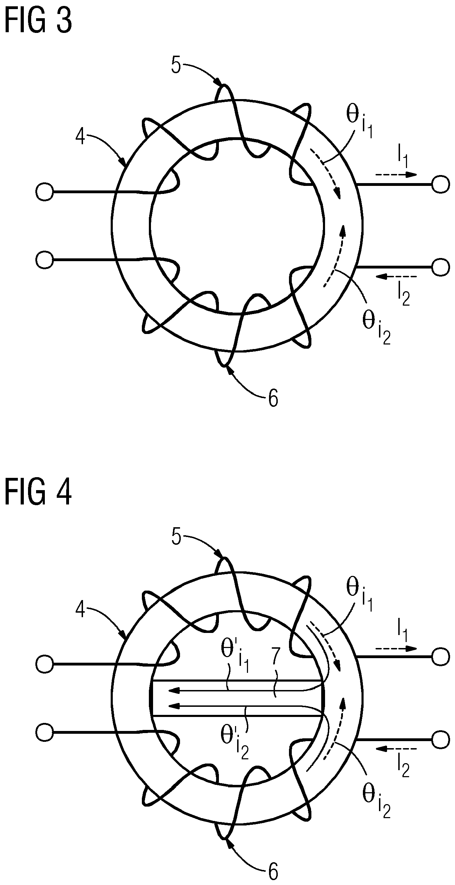

However, a common mode filtering choke does not comprise differential filtering capabilities because, as shown in Fig. 3, magnetic flux caused by differential mode currents (I₁, I₂) cancels each other and therefore the impedance for differential mode currents is low.

In order to enhance the differential mode filtering capabilities, the choke comprises a plate-shaped or bar-shaped core element 7 (cf. Fig. 1). Said plate-shaped or bar-shaped core element 7 may be arranged symmetrically between said coils 5, 6. The core element 7 may provide a magnetic flux between the coupling sections 4.3, 4.4. According to an embodiment, the free ends of the core element 7 may abut at the coupling sections 4.3, 4.4.

As shown in Fig. 4, the magnetic flux caused by differential mode currents (I₁, I₂) has the same flow direction in the plate-shaped or bar-shaped core element 7 which improves the differential mode filtering capabilities.

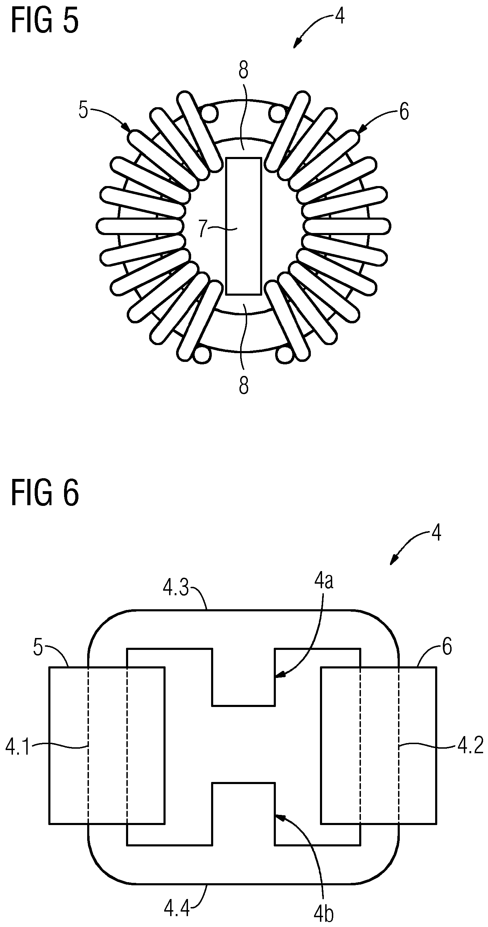

Fig. 5 shows a further embodiment of a choke implementing common mode and differential mode filtering capabilities. The main difference of the embodiment according to Fig. 5 in view of the embodiment of Fig. 2 is that an air gap 8 is provided between the closed magnetic core element 4 and the plate-shaped or bar-shaped core element 7. Said air gap 8 can be provided at one free end of the core element 7, i.e. at one of the coupling sections 4.3, 4.4 or at both free ends of the core element 7 i.e. at the free end arranged close to the coupling section 4.3 and the free end arranged close to the coupling section 4.4.

The filter response of the electromagnetic filtering section 1 can be chosen by the material and the dimensions of the core element 7, respectively, the air gaps 8. The greater the length, width and/or thickness of the core element 7, the greater is the effect of the differential mode filtering effect because the magnetic flux through the core element 7 and therefore the attenuation is increased.

The other way round, one or more air gaps 8 between the closed magnetic core element 4 and the plate-shaped or bar-shaped core element 7 reduce the magnetic flux through the core element 7 and therefore lower the attenuation, respectively, the differential mode filtering effect.

Fig. 6 shows a further embodiment of an electromagnetic filtering section 1. In contrary to the upper-described embodiments, the plate-shaped or bar-shaped core element 7 is eliminated based on a pair of core projections 4a, 4b. A first core projection 4a may be provided at a first coupling section 4.3 and a second core projection 4b may be provided at a second coupling section 4.4. The core projections 4a, 4b may be orientated towards the free centre of the choke and may face each other. So, in other words, the core projections 4a, 4b may reduce the distance between the first and second coupling section 4.3, 4.4 in an area between the coils 5, 6. Preferably, an air gap 8 is provided between the free ends of the core projections 4a, 4b.

As mentioned before, the dimensions of the core projections 4a, 4b (length, width and/or height) and the dimensions of the air gap 8 have influence on the differential mode filtering effect of the choke, respectively, the electromagnetic filtering section 1 and may be dimensioned according to the desired filtering requirements.

The closed magnetic core element 4 and/or the plate-shaped or bar-shaped core element 7 can be manufactured by injection moulding or powder compression moulding. Alternatively or in addition, the closed magnetic core element 4 and/or the plate-shaped or bar-shaped core element 7 can be made of ferrite or laminated metal sheets.

The coils 5, 6 may comprise the same number of turns and the same winding direction (see Fig. 3 and 4). According to other embodiments, the number of turns of coils 5, 6 may be different in order to enhance the differential filtering effect.

It should be noted that the description and drawings merely illustrate the principles of the proposed invention. Those skilled in the art will be able to implement various arrangements that, although not explicitly described or shown herein, embody the principles of the invention.

**List of reference numerals**
- 1: electromagnetic filtering section
- 1.1: common mode filtering section
- 1.2: differential mode filtering section
- 2: AC power input
- 3: power conversion entity
- 4: closed magnetic core element
- 4a, 4b: core projections
- 4.1: coil section
- 4.2: coil section
- 4.3: coupling section
- 4.4: coupling section
- 5: coil
- 5.1: coil end
- 5.2: coil end
- 6: coil
- 6.1: coil end
- 6.2: coil end
- 7: plate-shaped / bar-shaped core element
- 8: air gap

## Claims

1. Induction hob comprising an AC power input (2) and a power conversion entity (3) adapted to provide high frequency electric current to an induction coil, wherein an electromagnetic filtering section (1) is provided between said AC power input (2) and said power conversion entity (3);
**characterized in that** said electromagnetic filtering section (1) comprises common mode filtering means and differential mode filtering means, wherein said electromagnetic filtering section (1) comprises a closed magnetic core element (4) around which at least two coils (5, 6) are provided;
wherein said common mode filtering means is provided in form of said closed magnetic core element (4) and said coils (5, 6) ;
wherein said differential mode filtering means are adapted to enable a direct magnetic flux between the coil ends (5.1, 5.2, 6.1, 6.2) of each coil (5, 6) in order to obtain a differential mode filtering effect;
wherein said electromagnetic filtering section provides common mode and differential mode filtering capabilities in a single component.

2. Induction hob according to claim 1, wherein said closed magnetic core element (4) comprises a ring-like or polygonal shape.

3. Induction hob according to anyone of the preceding claims, wherein said differential mode filtering means comprise a bar-shaped or plate-shaped core element (7) arranged between said coils (5, 6).

4. Induction hob according to claim 1, wherein an air gap (8) is provided at one side or each side between said bar-shaped or plate-shaped core element(7) and said closed magnetic core element (4).

5. Induction hob according to claim 1, wherein said closed magnetic core element (4) comprises core projections (4a, 4b) facing each other at opposite sections of the closed magnetic core element (4), said core projections (4a, 4b) forming said means for closing a magnetic flux between said coils (5, 6).

6. Induction hob according to claim 2, wherein the sections of the closed magnetic core element arranged between said coils (5, 6) comprise an E-like or essentially E-like shape.

7. Induction hob according to anyone of the preceding claims, wherein said closed magnetic core element (4) and/or said bar-shaped or plate-shaped core element (7) are injection moulded or powder compression moulded elements.

8. Induction hob according to anyone of the claims 1 to 3, wherein said closed magnetic core element (4) and/or said bar-shaped or plate-shaped core element (7) are made of ferrite or laminated metal sheet.

9. Induction hob according to anyone of the preceding claims, wherein said coils (5, 6) comprise the same number of turns or a different number of turns.

10. Induction hob according to anyone of the preceding claims, wherein said coils (5, 6) comprise the same winding direction.

11. Induction hob according to anyone of the preceding claims, wherein the permeability of said closed magnetic core element (4) and/or said bar-shaped or plate-shaped core element (7) is chosen in order to obtain a desired filtering capability for induction hob applications.

12. Method for increasing differential filtering effect in an induction hob, said induction hob comprising an AC power input (2) and a power conversion entity (3) adapted to provide high frequency electric current to an induction coil, said induction hob further comprising an electromagnetic filtering section (1) provided between said AC power input (2) and said power conversion entity (3), **characterised by** said electromagnetic filtering section (1) comprising common mode filtering means and differential mode filtering means, wherein said electromagnetic filtering section (1) comprises a closed magnetic core element (4) around which at least two coils (5, 6) are provided, said closed magnetic core element (4) and said coils (5, 6) providing said common mode filtering, and wherein said differential mode filtering means enable a direct magnetic flux between the coil ends (5.1, 5.2, 6.1, 6.2) of each coil (5, 6) in order to obtain differential mode filtering effect; wherein said electromagnetic filtering section provides common mode and differential mode filtering capabilities in a single component.

## Patentansprüche

1. Induktionskochfeld, einen Wechselstromeingang (2) und eine Stromumwandlungsentität (3) umfassend, die eingerichtet ist, um einer Induktionsspule hochfrequenten elektrischen Strom bereitzustellen, wobei ein elektromagnetischer Filterabschnitt (1) zwischen dem Wechselstromeingang (2) und der Stromumwandlungsentität (3) bereitgestellt ist;
**dadurch gekennzeichnet, dass** der elektromagnetische Filterabschnitt (1) ein Gleichtaktfiltermittel und ein Gegentaktfiltermittel umfasst, wobei der elektromagnetische Filterabschnitt (1) ein geschlossenes Magnetkernelement (4) umfasst, um das herum mindestens zwei Spulen (5, 6) bereitgestellt sind;
wobei das Gleichtaktfiltermittel in Gestalt des geschlossenen Magnetkernelements (4) und der Spulen (5, 6) bereitgestellt ist;
wobei das Gegentaktfiltermittel eingerichtet ist, um einen unmittelbaren magnetischen Kraftfluss zwischen den Spulenenden (5.1, 5.2, 6.1, 6.2) jeder Spule (5, 6) zu ermöglichen, um eine Gegentaktfilterwirkung zu erhalten;
wobei der elektromagnetische Filterabschnitt Gleichtakt- und Gegentaktfilterfähigkeiten in einer einzelnen Komponente bereitstellt.

2. Induktionskochfeld nach Anspruch 1, wobei das geschlossene Magnetkernelement (4) eine Ring-ähnliche oder polygonale Gestalt umfasst.

3. Induktionskochfeld nach einem der vorhergehenden Ansprüche, wobei das Gegentaktfiltermittel ein stabförmiges oder plattenförmiges Kernelement (7) umfasst, das zwischen den Spulen (5, 6) angeordnet ist.

4. Induktionskochfeld nach Anspruch 1, wobei ein Luftspalt (8) an einer Seite oder an jeder Seite zwischen dem stabförmigen oder plattenförmigen Kernelement (7) und dem geschlossenen Magnetkernelement (4) bereitgestellt ist.

5. Induktionskochfeld nach Anspruch 1, wobei das geschlossene Magnetkernelement (4) Kernvorsprünge (4a, 4b) umfasst, die einander an entgegengesetzten Abschnitten des geschlossenen Magnetkernelements (4) gegenüberstehen, wobei die Kernvorsprünge (4a, 4b) das Mittel zum Schließen eines magnetischen Kraftflusses zwischen den Spulen (5, 6) ausbilden.

6. Induktionskochfeld nach Anspruch 2, wobei die Abschnitte des geschlossenen Magnetkernelements, die zwischen den Spulen (5, 6) angeordnet sind, eine E-ähnliche oder im Wesentlichen E-ähnliche Gestalt umfassen.

7. Induktionskochfeld nach einem der vorhergehenden Ansprüche, wobei das geschlossene Magnetkernelement (4) und/oder das stabförmige oder plattenförmige Kernelement (7) Elemente aus Spritzguss oder aus gesintertem Pulver sind.

8. Induktionskochfeld nach einem der Ansprüche 1 bis 3, wobei das geschlossene Magnetkernelement (4) und/oder das stabförmige oder plattenförmige Kernelement (7) aus Ferrit oder laminiertem Metallblech angefertigt sind.

9. Induktionskochfeld nach einem der vorhergehenden Ansprüche, wobei die Spulen (5, 6) die gleiche Anzahl von Windungen oder eine verschiedene Anzahl von Windungen umfassen.

10. Induktionskochfeld nach einem der vorhergehenden Ansprüche, wobei die Spulen (5, 6) die gleiche Wicklungsrichtung umfassen.

11. Induktionskochfeld nach einem der vorhergehenden Ansprüche, wobei die Permeabilität des geschlossenen Magnetkernelements (4) und/oder des stabförmigen oder plattenförmigen Kernelements (7) ausgewählt wird, um eine erwünschte Filterfähigkeit für Induktionskochfeldanwendungen zu erhalten.

12. Verfahren zum Verbessern einer Gegentaktfilterwirkung in einem Induktionskochfeld, wobei das Induktionskochfeld einen Wechselstromeingang (2) und eine Stromumwandlungsentität (3) umfasst, die eingerichtet ist, um einer Induktionsspule hochfrequenten elektrischen Strom bereitzustellen, wobei das Induktionskochfeld weiterhin einen elektromagnetischen Filterabschnitt (1) umfasst, der zwischen dem Wechselstromeingang (2) und der Stromumwandlungsentität (3) bereitgestellt ist, **dadurch gekennzeichnet, dass** der elektromagnetische Filterabschnitt (1) ein Gleichtaktfiltermittel und ein Gegentaktfiltermittel umfasst, wobei der elektromagnetische Filterabschnitt (1) ein geschlossenes Magnetkernelement (4) umfasst, um das herum mindestens zwei Spulen (5, 6) bereitgestellt sind, wobei das geschlossene Magnetkernelement (4) und die Spulen (5, 6) das Gleichtaktfiltern bereitstellen und wobei das Gegentaktfiltermittel einen unmittelbaren magnetischen Kraftfluss zwischen den Spulenenden (5.1, 5.2, 6.1, 6.2) jeder Spule (5, 6) ermöglicht, um eine Gegentaktfilterwirkung zu erhalten;
wobei der elektromagnetische Filterabschnitt Gleichtakt- und Gegentaktfilterfähigkeiten in einer einzelnen Komponente bereitstellt.

## Revendications

1. Table de cuisson à induction comprenant une entrée d'alimentation CA (2) et une entité de conversion de puissance (3) adaptée pour fournir un courant électrique haute fréquence à une bobine d'induction, une section de filtrage électromagnétique (1) étant prévue entre ladite entrée d'alimentation CA (2) et ladite entité de conversion de puissance (3) ;
**caractérisée en ce que** ladite section de filtrage électromagnétique (1) comprend des moyens de filtrage en mode commun et des moyens de filtrage en mode différentiel, ladite section de filtrage électromagnétique (1) comprenant un élément de noyau magnétique fermé (4) autour duquel au moins deux bobines (5, 6) sont prévues ; lesdits moyens de filtrage en mode commun étant prévus sous la forme dudit élément de noyau magnétique fermé (4) et desdites bobines (5, 6) ;
lesdits moyens de filtrage en mode différentiel étant adaptés pour permettre un flux magnétique direct entre les extrémités des bobines (5.1, 5.2, 6.1, 6.2) de chaque bobine (5, 6) afin d'obtenir un effet de filtrage en mode différentiel ;
ladite section de filtrage électromagnétique fournissant des capacités de filtrage en mode commun et en mode différentiel dans un seul composant.

2. Table de cuisson à induction selon la revendication 1, ledit élément de noyau magnétique fermé (4) comprenant une forme annulaire ou polygonale.

3. Table de cuisson à induction selon l'une quelconque des revendications précédentes, lesdits moyens de filtrage en mode différentiel comprenant un élément de noyau en forme de barre ou de plaque (7) agencé entre lesdites bobines (5, 6).

4. Table de cuisson à induction selon la revendication 1, un entrefer (8) étant prévu d'un côté ou de chaque côté entre ledit élément de noyau en forme de barre ou de plaque (7) et ledit élément de noyau magnétique fermé (4).

5. Table de cuisson à induction selon la revendication 1, ledit élément de noyau magnétique fermé (4) comprenant des saillies de noyau (4a, 4b) se faisant face l'une l'autre au niveau de sections opposées de l'élément de noyau magnétique fermé (4), lesdites saillies de noyau (4a, 4b) formant lesdits moyens pour fermer un flux magnétique entre lesdites bobines (5, 6).

6. Table de cuisson à induction selon la revendication 2, les sections de l'élément de noyau magnétique fermé agencé entre lesdites bobines (5, 6) comprenant une forme en E ou essentiellement en E.

7. Table de cuisson à induction selon l'une quelconque des revendications précédentes, ledit élément de noyau magnétique fermé (4) et/ou ledit élément de noyau en forme de barre ou de plaque (7) étant des éléments moulés par injection ou moulés par compression de poudre.

8. Table de cuisson à induction selon l'une quelconque des revendications 1 à 3, ledit élément de noyau magnétique fermé (4) et/ou ledit élément de noyau en forme de barre ou de plaque (7) étant des éléments en ferrite ou en tôle laminée.

9. Table de cuisson à induction selon l'une quelconque des revendications précédentes, lesdites bobines (5, 6) comprenant le même nombre de tours ou un nombre de tours différent.

10. Table de cuisson à induction selon l'une quelconque des revendications précédentes, lesdites bobines (5, 6) comprenant le même sens de bobinage.

11. Table de cuisson à induction selon l'une quelconque des revendications précédentes, la perméabilité dudit élément de noyau magnétique fermé (4) et/ou dudit élément de noyau en forme de barre ou de plaque (7) étant choisie afin d'obtenir une capacité de filtrage souhaitée pour les applications de table de cuisson à induction.

12. Procédé pour augmenter l'effet de filtrage différentiel dans une table de cuisson à induction, ladite table de cuisson à induction comprenant une entrée d'alimentation CA (2) et une entité de conversion de puissance (3) adaptée pour fournir un courant électrique haute fréquence à une bobine d'induction, ladite table de cuisson à induction comprenant en outre une section de filtrage électromagnétique (1) prévue entre ladite entrée d'alimentation CA (2) et ladite entité de conversion de puissance (3), **caractérisé en ce que** ladite section de filtrage électromagnétique (1) comprend des moyens de filtrage en mode commun et des moyens de filtrage en mode différentiel, ladite section de filtrage électromagnétique (1) comprenant un élément de noyau magnétique fermé (4) autour duquel au moins deux bobines (5, 6) sont prévues, ledit élément de noyau magnétique fermé (4) et lesdites bobines (5, 6) fournissant ledit filtrage en mode commun, et lesdits moyens de filtrage en mode différentiel permettant un flux magnétique direct entre les extrémités de bobine (5.1, 5.2, 6.1, 6.2) de chaque bobine (5, 6) afin d'obtenir un effet de filtrage en mode différentiel ; ladite section de filtrage électromagnétique fournissant des capacités de filtrage en mode commun et en mode différentiel dans un seul composant.
